# EUROPEAN PATENT APPLICATION

(11) **EP 4 603 555 A1**
(43) Date of publication of application: **20.08.2025**
(21) Application number: 23877234.7
(22) Date of filing: 06.10.2023
(51) Int. Cl.: C09D 183/08, B32B 27/00, C09D 5/00, C09D 5/38, C09D 7/20, C09D 183/05, C09D 183/07, C09J 7/40, C09K 3/00, D21H 27/00

(54) **ADDITION-CURABLE MOLD-RELEASING SILICONE COMPOSITION FOR SILICONE ADHESIVE, RELEASE FILM, AND RELEASE PAPER**

(30) Priority: 13.10.2022 JP 2022164623
(71) Applicant: SHIN-ETSU CHEMICAL CO., LTD., Tokyo 1000005 (JP)
(72) Inventor: OGIKUBO Shunya, Annaka-shi, Gunma 379-0224 (JP); YASUDA Hiroyuki, Annaka-shi, Gunma 379-0224 (JP)
(74) Representative: Schicker, Silvia
(86) International application number: PCT/JP2023/036460
(87) International publication number: WO 2024/080229

(57) **Abstract**

The present invention is an addition-curable releasing silicone composition for a silicone adhesive, the composition including: (A) a fluorine-containing organopolysiloxane having at least two alkenyl groups, at least one fluorine-containing substituent, and at least one aryl group and/or aralkyl group, wherein a fluorine content is 25 to 50 mass%, a proportion of a total number of the aryl group and the aralkyl group relative to a total number of a monovalent substituent is 0.1 to 20 mol%, and in molecular-weight distribution measurement, an area of a component having a molecular weight of 4,000 or less accounts for 2 to 20% of a total peak area; (B) an organohydrogenpolysiloxane having at least three SiH groups; (C) a platinum-group metal catalyst; and (D) a non-fluorine solvent. This provides a silicone composition for a releasing agent that can be diluted with a non-fluorine solvent, that has high coatability and adhesiveness on a film substrate, and that yields a cured coating having a small releasing force when evaluated by a transferring method, and small decrease in a residual adhesion force.

## Description

### TECHNICAL FIELD

The present invention relates to an addition-curable releasing silicone composition for a silicone pressure sensitive adhesive that can be diluted with a non-fluorine solvent (namely, an organic solvent having no fluorine atom in a molecule) represented by a non-halogen solvent (namely, an organic solvent having no halogen atom in a molecule), that exhibits good releasability against a silicone pressure sensitive adhesive particularly when evaluated by a transferring method, and that has excellent transparency and adhesiveness.

### BACKGROUND ART

For a purpose of preventing adhesion or sticking between a substrate such as paper or a plastic film and a pressure-sensitive adhesive substance such as a silicone pressure sensitive adhesive, a cured coating of a silicone composition has been conventionally formed on an outer surface of the substrate to impart releasability against the pressure-sensitive adhesive substance. This material is commonly called "release paper".

Among the above pressure-sensitive adhesive substances, a silicone pressure sensitive adhesive mainly containing an organopolysiloxane has excellent heat resistance, cold resistance, chemical resistance, electric insurability, low toxicity, etc., and thus the silicone pressure sensitive adhesive is used in a wide range of application. Since the silicone pressure sensitive adhesive has an extremely strong adhesion force, a silicone cured coating to be formed on the substrate needs to have excellent releasability in order that a pressure sensitive adhesive tape or a pressure sensitive adhesive label to which this silicone pressure sensitive adhesive is applied is easily released from the substrate.

Patent Document 1 describes an organopolysiloxane composition having a fluorine-containing substituent represented by CₙF₂ₙ₊₁CH₂CH₂-, wherein "n" represents an integer of 1 or more, as a silicone composition to yield the silicone cured coating having excellent releasability. Patent Document 2 proposes an organopolysiloxane composition, etc. having a fluorine-containing substituent represented by F-[CF(CF₃)CF₂O]ₙCF(CF₃)CF₂OCH₂CH₂CH₂-, wherein "n" represents an integer of 1 to 5.

Used for applying these organopolysiloxane compositions on the substrate is a solution in which these compositions are diluted with an organic solvent. In this case, a fluorine solvent (namely, an organic solvent having a fluorine atom in a molecule) is preferably used as the organic solvent in terms of solubility of the fluorine-containing organopolysiloxane composition and coatability on the substrate.

Although the fluorine solvent can sufficiently dilute the fluorine-containing organopolysiloxane, the fluorine solvent is expensive, and has a problem of an adverse effect on the natural environment if diffused in the air.

Patent Document 3 proposes a silicone composition having a fluorine-containing substituent for release paper, as a silicone composition that can be diluted with the non-fluorine solvent and that yields a silicone cured coating having excellent releasability.

However, this silicone composition for a releasing agent dissolved in the non-fluorine solvent tends to cause a higher releasing force than a composition diluted with a fluorine solvent. Patent Document 3 does not describe coatability and adhesiveness, but the silicone composition for release paper dissolved in the non-fluorine solvent may deteriorate the coatability on the substrate compared with a composition diluted with a fluorine solvent. The deteriorated coatability on the substrate causes a portion of the substrate uncoated with the silicone composition for a releasing agent to contact with the pressure sensitive adhesive, leading to a considerably large releasing force.

In addition, the silicone composition coating for release paper obtained by dissolution in the non-fluorine solvent exhibits low adhesiveness to a film substrate, and the release layer may fall from the substrate with time.

Patent Document 4 proposes, as a method for improving the coatability, a method of adding a linear perfluoropolyether defoaming agent into a silicone composition for a releasing agent. This linear perfluoropolyether defoaming agent has no reactive functional group, and is consequently not incorporated into crosslinking. Accordingly, the defoaming agent migrates into the pressure sensitive adhesive layer side during release of the pressure sensitive adhesive, and may decrease a residual adhesion force.

In the above patent documents, as an evaluation method for the release property, force applied when a tape having a pressure sensitive adhesive layer is attached to a release layer and then peeled off is evaluated (tape method). However, force applied when a pressure sensitive adhesive is cured on a release layer, attached with a substrate from above, and then peeled off is not evaluated (transferring method). The transferring method is utilized when a pressure sensitive adhesive layer is formed on a substrate having low heat resistance, etc., and the force required for the release tends to be larger than in the tape method.

A method of adding a functional compound that interacts with the substrate is known for improvement of adhesiveness. The substrate-functional compound, however, has low compatibility with the silicone composition, and the composition in which the substrate-functional compound is added into the silicone composition causes a problem such that the substrate-functional compound is separated during a long-term storage or transportation. Use of the separated composition as it is may fail to obtain the original performance. The substrate-functional compound may migrate to the pressure sensitive adhesive layer side during release of the pressure sensitive adhesive to deteriorate a residual adhesion force.

As noted above, no release silicone composition for a pressure sensitive adhesive that can be diluted with a non-fluorine solvent, and that has sufficient coatability for completely coating a substrate, adhesiveness for not falling from the substrate with time, releasability exhibiting light releasing against a pressure sensitive adhesive having high adhesiveness even when evaluated by the transferring method, and a residual adhesion force has been known in the conventional art.

### CITATION LIST

### PATENT LITERATURE

Patent Document 1: JP H5-7434 B
Patent Document 2: JP H4-76391 B
Patent Document 3: JP H7-18185 A
Patent Document 4: JP 2004-300414 A

### SUMMARY OF INVENTION

### TECHNICAL PROBLEM

The present invention has been made in view of the above circumstances. An object of the present invention is to provide a silicone composition for a releasing agent that can be diluted with a non-fluorine solvent, that has high coatability and adhesiveness to a film substrate, and that yields a cured coating having a small releasing force when evaluated by the transferring method and causing small decrease in a residual adhesion force.

### SOLUTION TO PROBLEM

To solve the above problem, the present invention provides an addition-curable releasing silicone composition for a silicone pressure sensitive adhesive, the composition including:
(A) a fluorine-containing organopolysiloxane at 100 parts by mass, the fluorine-containing organopolysiloxane having at least two alkenyl groups bonded to a silicon atom in one molecule, at least one fluorine-containing substituent bonded to a silicon atom, and at least one aryl group and/or aralkyl group bonded to a silicon atom, wherein a fluorine content is 25 to 50 mass%, a proportion of a total number of the aryl group and the aralkyl group relative to a total number of a monovalent substituent bonded to a silicon atom is 0.1 to 20 mol%, and in molecular-weight distribution measurement by gel permeation chromatography analysis, an area of a component having a molecular weight of 4,000 or less accounts for 2 to 20% of a total peak area;
(B) an organohydrogenpolysiloxane having at least three hydrogen atoms bonded to a silicon atom (SiH groups) in one molecule at an amount so that a mole ratio of the hydrogen atoms bonded to a silicon atom (the SiH groups) in the component (B) relative to the alkenyl groups in the component (A) is 0.1 to 15;
(C) a platinum-group metal catalyst at 0.5 to 5,000 ppm in terms of mass of a platinum-group metal relative to the component (A); and
(D) a non-fluorine solvent at 100 to 20,000 parts by mass.

The addition-curable releasing silicone composition for a silicone pressure sensitive adhesive as above can provide the siliconecomposition for a releasing agent that can be diluted with a non-fluorine solvent, that has high coatability and adhesiveness to a film substrate, and that yields a cured coating having a small releasing force when evaluated by the transferring method and causing small decrease in a residual adhesion force.

The mole ratio of the hydrogen atoms bonded to a silicon atom (the SiH groups) in the component (B) relative to the alkenyl groups in the component (A) is preferably 0.5 to 5.

The addition-curable releasing silicone composition for a silicone pressure sensitive adhesive as above can provide the silicone composition for a releasing agent that has better coatability, adhesiveness, and releasability.

In the component (B), a ratio of a total number of an aryl group and an aralkyl group relative to a total number of a monovalent substituent bonded to a silicon atom is preferably 0 to 50 mol%.

The addition-curable releasing silicone composition for a silicone pressure sensitive adhesive as above can provide the silicone composition for a releasing agent that has better coatability, adhesiveness, and releasability.

The component (D) is preferably a non-fluorine solvent having an SP value of 10.0 or less.

The addition-curable releasing silicone composition for a silicone pressure sensitive adhesive as above can provide the silicone composition for a releasing agent in which the component (A) is more favorably dissolved.

The component (D) is preferably at least one selected from the group consisting of a hydrocarbon solvent, a ketone solvent, an ether solvent, and an ester solvent.

The addition-curable releasing silicone composition for a silicone pressure sensitive adhesive as above can provide the silicone composition for a releasing agent in which the component (A) is more favorably dissolved.

In addition, the present invention provides a release film including:
a film substrate; and
a cured product layer of the above addition-curable releasing silicone composition for a silicone pressure sensitive adhesive formed on an outer surface of at least one side of the film substrate.

The release film as above can provide the release film having excellent releasability.

In addition, the present invention provides a release paper including:
a paper substrate; and
a cured product layer of the above addition-curable releasing silicone composition for a silicone pressure sensitive adhesive formed on an outer surface of at least one side of the paper substrate.

The release paper as above can provide the release paper having excellent releasability.

### ADVANTAGEOUS EFFECTS OF INVENTION

As above, the present invention can provide the silicone composition for a releasing agent that can be diluted with a non-fluorine solvent, that has high coatability and adhesiveness to a film substrate, and that yields a cured coating having a small releasing force when evaluated by the transferring method and causing small decrease in a residual adhesion force.

### DESCRIPTION OF EMBODIMENTS

As noted above, there has been a demand for development of the silicone composition for a releasing agent that can be diluted with a non-fluorine solvent, that has high coatability and adhesiveness to a film substrate, and that yields a cured coating having a small releasing force when evaluated by the transferring method and causing small decrease in a residual adhesion force.

The present inventor has made earnest study to achieve the above object, and consequently found that the silicone composition for a releasing agent that has high coatability and adhesiveness to a film substrate and that yields a cured coating having a small releasing force when evaluated by the transferring method and causing small decrease in a residual adhesion force can be obtained by blending the aforementioned components (A) to (D) at a specific ratio. It has also been found that the release silicone cured coating can be produced inexpensively without a risk of air pollution because this composition contains no fluorine solvent, and that this cured coating has excellent water repellency, oil repellency, and heat resistance. These findings have led to completion of the present invention.

Specifically, the present invention is an addition-curable releasing silicone composition for a silicone pressure sensitive adhesive, the composition including:
(A) a fluorine-containing organopolysiloxane at 100 parts by mass, the fluorine-containing organopolysiloxane having at least two alkenyl groups bonded to a silicon atom in one molecule, at least one fluorine-containing substituent bonded to a silicon atom, and at least one aryl group and/or aralkyl group bonded to a silicon atom, wherein a fluorine content is 25 to 50 mass%, a proportion of a total number of the aryl group and the aralkyl group relative to a total number of a monovalent substituent bonded to a silicon atom is 0.1 to 20 mol%, and in molecular-weight distribution measurement by gel permeation chromatography analysis, an area of a component having a molecular weight of 4,000 or less accounts for 2 to 20% of a total peak area;
(B) an organohydrogenpolysiloxane having at least three hydrogen atoms bonded to a silicon atom (SiH groups) in one molecule at an amount so that a mole ratio of the hydrogen atoms bonded to a silicon atom (the SiH groups) in the component (B) relative to the alkenyl groups in the component (A) is 0.1 to 15;
(C) a platinum-group metal catalyst at 0.5 to 5,000 ppm in terms of mass of a platinum-group metal relative to the component (A); and
(D) a non-fluorine solvent at 100 to 20,000 parts by mass.

Hereinafter, the present invention will be described in more detail, but the present invention is not limited thereto.

### Component (A)

The component (A) in the present invention is a fluorine-containing organopolysiloxane having at least two alkenyl groups bonded to a silicon atom in one molecule, at least one fluorine-containing substituent bonded to a silicon atom, and at least one aryl group and/or aralkyl group bonded to a silicon atom, wherein a fluorine content is 25 to 50 mass%, a proportion of a total number of the aryl group and the aralkyl group relative to a total number of a monovalent substituent bonded to a silicon atom is 0.1 to 20 mol%, and in molecular-weight distribution measurement by gel permeation chromatography analysis, an area of a component having a molecular weight of 4,000 or less accounts for 2 to 20% of a total peak area. The component (A) acts as a main agent (a base polymer) of the addition-curable releasing silicone composition for a silicone pressure sensitive adhesive of the present invention.

The fluorine-containing organopolysiloxane of the component (A) may be any one of a linear or branched organopolysiloxane, and a linear fluorine-containing organopolysiloxane represented by the following formula (1) is particularly preferably used. A main chain of a molecular chain of the linear fluorine-containing organopolysiloxane is composed of repetition of bifunctional diorganosiloxane units. The linear fluorine-containing organopolysiloxane essentially has: a diorganosiloxane unit having a fluorine-containing substituent bonded to a silicon atom (namely, a monovalent hydrocarbon group in which a part or all of hydrogen atoms bonded to a carbon atom are substituted with a fluorine atom and which may have an ether-bond oxygen atom (-O-)); and a diorganosiloxane unit having an aryl group and/or an aralkyl group bonded to a silicon atom, as the diorganosiloxane unit in the main chain. Both ends of the molecular chain are blocked with a triorganosiloxy group having an alkenyl group (an alkenyldiorganosiloxy group, a dialkenylorganosiloxy group, or a trialkenylsiloxy group). The linear fluorine-containing organopolysiloxane has: at least two alkenyl groups bonded to silicon atoms at both the ends in the molecular chain in the molecule; or at least two alkenyl groups bonded to silicon atoms at both the ends in the molecular chain and a silicon atom at a non-end in the molecular chain (at the middle of the molecular chain) in a molecule. In the following formula (1), the arrangement of the diorganosiloxane units in the main chain may be at random.

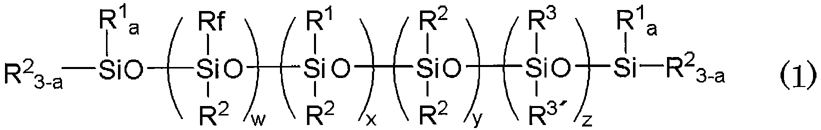

Here, R¹ represents an alkenyl group having 2 to 10 carbon atoms, and specific example thereof include a vinyl group, an allyl group, a propenyl group, an isopropenyl group, a butenyl group, an isobutenyl group, a hexenyl group, and a cyclohexenyl group.

R² represents an unsubstituted or substituted aliphatic monovalent hydrocarbon group having 1 to 10 carbon atoms excluding an aliphatic unsaturated group. Specific examples thereof include: alkyl groups such as a methyl group, an ethyl group, a propyl group, an isopropyl group, a butyl group, an isobutyl group, a sec-butyl group, a tert-butyl group, a pentyl group, a hexyl group, a cyclohexyl group, a heptyl group, an octyl group, a 2-ethylhexyl group, a nonyl group, and a decyl group; and groups in which a part or all of hydrogen atoms in these groups are substituted with a hydroxy group, a cyano group, etc., such as a hydroxypropyl group and a cyanoethyl group.

R³ represents an aryl group such as a phenyl group and a tolyl group, or an aralkyl group such as a benzyl group and a phenylethyl group. R^{3'} is R³ or R².

In the formula, "a" represents 1, 2, or 3, and "w", "x", "y", and "z" respectively represent an integer satisfying w ≥ 1, an integer satisfying x ≥ 0, an integer satisfying y ≥ 0, and an integer satisfying z ≥ 1, preferably "w" represents an integer of 10 to 300, "x" represents an integer of 0 to 20, "y" represents an integer of 50 to 800, and "z" represents an integer of 1 to 150, and more preferably, "w" represents an integer of 20 to 200, "x" represents an integer of 0 to 10, "y" represents an integer of 100 to 400, and "z" represents an integer of 5 to 100. A value of w+x+y+z is appropriately controlled so that a fluorine content in each molecule is 25 to 50 mass% and so that a proportion of a total number of the aryl group and the aralkyl group relative to a total number of a monovalent substituent bonded to a silicon atom in the molecule (namely, a ratio of R³ (provided that a case of R^{3'} = R²) or a ratio of a sum of R³+R^{3'} (provided that a case of R^{3'} = R³), relative to a sum of R¹, R², R³, R^{3'}, and Rf) is 0.1 to 20 mol%.

In the formula (1), examples of the fluorine-containing substituent represented by Rf (namely, a monovalent hydrocarbon group optionally having an ether-bond oxygen atom (-O-) in which a part or all of hydrogen atoms bonded to a carbon atom are substituted with a fluorine atom) include monovalent fluorine-containing substituents represented by the following formula (2) (namely, perfluoroalkyl groups, polyfluoroalkyl groups, perfluorooxyalkyl groups (monovalent perfluoropolyether groups) or polyfluorooxyalkyl groups (monovalent polyfluoropolyether groups)).

Formula (2): F(CHₙ₁F₂₋ₙ₁O)_{b1}(CHₙ₂F₂₋ₙ₂CHₙ₃F₂₋ₙ₃O)_{b2}(CHₙ₄F₂₋ₙ₄CHₙ₅F₂₋ n₅CHₙ₆F₂₋ₙ₆)_{b3}[CF(CF₃)CHₙ₇F₂₋ₙ₇O]_{b4}[CHₙ₈F₂₋ₙ₈CF(CF₃)O]_{b5}(CHₙ₉F_{2- n9}CHₙ₁₀F2₋ₙ₁₀CHₙ₁₁F2-ₙ₁₁CHₙ₁₂F₂₋ₙ₁₂)_{b6}[CF(CF₃)CHₙ₁₃F₂₋ₙ₁₃CHₙ₁₄F₂₋ n₁₄]_{b7}[CHₙ₁₅F₂₋ₙ₁₆CF(CF₃)CHn₁₇F₂₋ₙ₁₇]_{b8}[CHₙ₁₈F₂₋ₙ₁₈CHₙ₁₉F_{2- n19}CF(CF₃)]_{b9}(CHₙ₂₀F₂₋ₙ₂₀CHₙ₂₁F₂₋ₙ₂₁CHₙ₂₂F₂₋ₙ₂₂CHₙ₂₃F₂₋ₙ₂₃CHₙ₂₄F₂- ₙ₂₄)_{b10}[CF(CF₃)CHₙ₂₅F₂₋ₙ₂₅CHₙ₂₆F₂₋ₙ₂₆CHₙ₂₇F₂₋ₙ₂₇]_{b11}[CHₙ₂₈F_{2- n28}CF(CF₃)CHₙ₂₉F₂₋ₙ₂₉CHₙ₃₀F₂₋ₙ₃₀]_{b12}[CHₙ₃₁F₂₋ₙ₃₁CHₙ₃₂F_{2- n32}CF(CF₃)CHₙ₃₃F₂₋ₙ₃₃]_{b13}[CHₙ₃₄F₂₋ₙ₃₄CHn₃₅F₂₋ₙ₃₅CHₙ₃₆F_{2- n36}CF(CF₃)]b14(CHₙ₃₇F₂₋ₙ₃₇CHₙ₃₈F₂₋ₙ₃₈CHₙ₃₉F₂₋ₙ₃₉CHₙ₄₀F₂₋ₙ₄₀CHₙ₄₁F₂₋ n₄₂CHₙ₄₃F2-ₙ₄₃)_{b15}[CF(CF3)CHₙ₄₄F2-ₙ₄₄CHₙ₄₅F2-ₙ₄₅CHₙ₄₆F2-ₙ₄₆CHₙ₄₇F₂₋ n₄₇O]_{b16}[CHₙ₄₈F₂₋ₙ₄₈CF(CF₃)CHn₄₉F₂₋ₙ₄₉CHₙ₅₀F₂₋ₙ₅₀CHₙ₅₁F₂₋ n₅₁O]_{b17}[CHₙ₅₂F₂₋ₙ₅₂CHₙ₅₃F₂₋ₙ₅₃CF(CF₃)CHₙ₅₄F₂₋ₙ₅₄CHₙ₅₅F_{2- n55}O]_{b18}[CHₙ₅₆F₂₋ₙ₅₆CHₙ₅₇F₂₋ₙ₅₇CHₙ₅₈F₂₋ₙ₅₈CF(CF₃)CHₙ₅₉F₂₋ n₅₉O]_{b19}[CHₙ₆₀F₂₋ₙ₆₀CHₙ₆₁F₂₋ₙ₆₁CHₙ₆₂F₂₋ₙ₆₂CHₙ₆₃F_{2- n63}CF(CF₃)O]_{b20}[CF(CF₃)]_{b21}(CHₙ₆₄F₂₋ₙ₆₄)_{b22}-X- [CF(CF₃)]_{b23}(CHₙ₆₅F₂₋ₙ₆₅)b₂₄-

In the formula, b1 to b24 represent an integer of 0 or more. At least one of b1 to b22 represents an integer of 1 or more. A sum of b1 to b22 is preferably 25 or less, and a sum of b23 and b24 is preferably 8 or less. n1 to n65 each independently represent 0, 1, or 2. X represents an oxygen atom or a single bond.

In the above formula, repeating units on the left side of "-X-" may be randomly bonded to each other, and repeating units on the right side of "-X-", which are the [CF (CF₃)] unit and the (CHₙ₆₅F₂₋ₙ₆₅) unit, may also be randomly bonded to each other.

Among the fluorine-containing substituents represented by Rf, the fluoro(poly)ether-containing organic group (the perfluorooxyalkyl group or the polyfluorooxyalkyl group) is more preferably a group represented by any one of the following formula (3), (4), or (5).

Formula (3): F[CF(CF₃)CF₂O]_{c1}[CF(CF₃)CH₂O]_{c2}(CF₂)_{c3}(CH₂)_{c4}-

In the formula, c1 to c4 each represent an integer of 0 or more, c1+c2 represents an integer of 1 or more, and c3+c4 represents an integer of 0 or more. c1+c2 preferably represents 25 or less, more preferably 15 or less, and further preferably 9 or less. c3+c4 preferably represents 8 or less. The repeating units in F[CF(CF₃)CF₂O]_{c1}[CF(CF₃)CH₂O]_{c2}(CF₂)_{c3}(CH₂)_{c4}- may be randomly bonded to each other.

Formula (4): F(CF₂O)_{d1}(CF₂CF₂O)_{d2}(CF₂CF₂CF₂O)_{d3}[CF(CF₃)CF₂O]_{d4}(CF₂)_{d5}-O- (CH₂)_{d6}-

In the formula, d1 to d6 represent an integer of 0 or more, and d1+d2+d3+d4 represents an integer of 1 or more. d1+d2+d3+d4 preferably represents 25 or less, more preferably 15 or less, and further preferably 9 or less. d6 preferably represents 8 or less. The repeating units in F(CF₂O)_{d1}(CF₂CF₂O)_{d2}(CF₂CF₂CF₂O)_{d3}[CF(CF₃)CF₂O]_{d4}(CF₂)_{d5} may be randomly bonded to each other.

Formula (5): F(CF₂)ₑ₁(CH₂)ₑ₂-O-(CH₂)ₑ₃-

In the formula, e1 and e2 each represent an integer of 1 or more, and e3 represents an integer of 0 or more. e1 preferably represents 8 or less, and e2 and e3 each preferably represent 6 or less.

Examples of the particularly preferable fluoro(poly)ether-containing organic group include the following groups.

F[CF(CF₃)CF₂O]_{f}CF(CF₃)CF₂O(CH₂)₃-

F[CF(CF₃)CF₂O]_{f}CF(CF₃)CH₂O(CH₂)₃-

F[CF(CF₃)CF₂O]_{f}(CF₂)₂(CH₂)₂-

F(CF₂O)_{g}[CF(CF₃)CF₂O]ₕCF₂-O-(CH₂)₃-

F(CF₂O)_{g}(CF₂CF₂O)ₕCF₂-O-(CH₂)₃-

F(CF₂)ᵢ(CH₂)₂O(CH₂)₃-

F(CF₂)ᵢ(CH₂)₂-

In the formulae, "f" preferably represents 1 to 20, more preferably 2 to 12, and most preferably 3 to 9. g+h preferably represents 1 to 20, more preferably 2 to 12, and most preferably 3 to 9. "i" preferably represents 15 or less, more preferably 10 or less, and most preferably 6 or less.

Specific examples of the fluorine-containing organopolysiloxane of the component (A) include compounds represented by the following formulae.

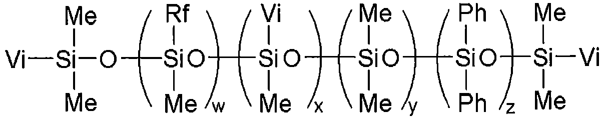

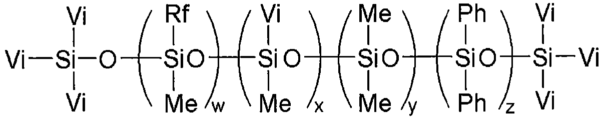

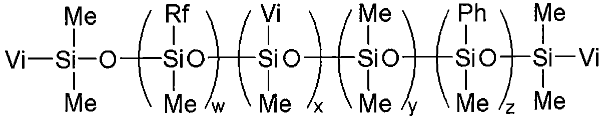

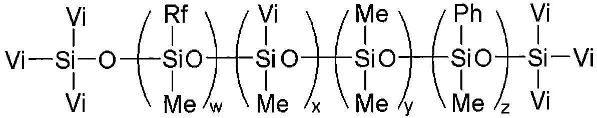

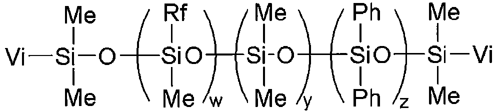

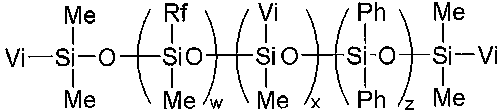

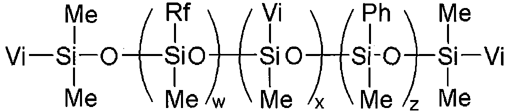

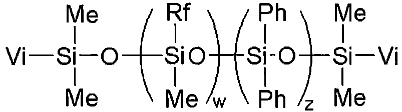

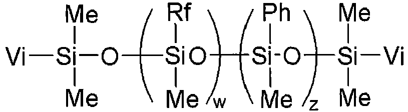

In the formulae, Rf, "w", "x", "y", and "z" each have the same means as above, Me represents a methyl group, Ph represents a phenyl group, and Vi represents a vinyl group.

The fluorine-containing organopolysiloxane of the component (A) needs to have a fluorine content in the molecule of 25 to 50 mass%, preferably 30 to 48 mass%, and more preferably 35 to 46 mass%. If the fluorine content in the component (A) is less than 25 mass%, a releasing force against the silicone pressure sensitive adhesive of the obtained cured coating becomes high. An organopolysiloxane having a fluorine content of more than 50 mass% is insoluble in the non-fluorine solvent.

Further, in the fluorine-containing organopolysiloxane of the component (A), a proportion of a total number of the aryl group and the aralkyl group relative to a total number of a monovalent substituent bonded to a silicon atom needs to be 0.1 to 20 mol%. An organopolysiloxane having this proportion of less than 0.1 mol% causes heavy release when the releasability against the silicone pressure sensitive adhesive is evaluated by the transferring method. An organosiloxane with more than 20 mol% considerably deteriorates adhesiveness to the substrate.

Further, the fluorine-containing organopolysiloxane of the component (A) needs to be a fluorine-containing organopolysiloxane in which, in molecular-weight distribution measurement by gel permeation chromatography (GPC) analysis, an area of a component having a molecular weight of 4,000 or less (for example, a component having a molecular weight of more than 0 and 4,000 or less) accounts for 2 to 20% of a total peak area. An organopolysiloxane in which the area of the component having a molecular weight of 4,000 or less by GPC analysis is less than 2% in the total peak area deteriorates solubility in the non-fluorine solvent and coatability on the substrate. An organopolysiloxane with more than 20% deteriorates adhesiveness to the substrate and largely decrease the residual adhesion force.

In the present invention, the area ratio of the component having a molecular weight of 4,000 or less means the proportion (%) of the peak area of components in the molecular weight region lower than the boundary, the peak corresponding to a molecular weight of 4,000, relative to the peak area of all components (entire peak area) in molecular-weight distribution measurement by gel permeation chromatography (GPC) analysis with, for example, a fluorine solvent such as hydrochlorofluorocarbon (HCFC)-225 as a developing solvent and with polymethyl methacrylate (PMMA) as a standard sample.

The fluorine-containing organopolysiloxane of the component (A) may be used singly, or may be used in combination of two or more thereof.

### Component (B)

The organohydrogenpolysiloxane of the component (B) has at least three hydrogen atoms bonded to a silicon atom (SiH groups) in one molecule. These SiH groups and the alkenyl groups in the component (A) cause a hydrosilylation reaction to be crosslinked and cured, resulting in formation of the cured coating.

The organohydrogenpolysiloxane of the component (B) may have any one of linear, cyclic, branched, and three-dimensional mesh structures, and may have a fluorine-containing substituent similar to Rf in the formula (1) of the component (A) (namely, a monovalent hydrocarbon group optionally having an ether-bond oxygen atom (-O-) in which a part or all of hydrogen atoms bonded to a carbon atom are substituted with a fluorine atom) in a molecule (a fluorine-containing organohydrogenpolysiloxane). For example, a linear organohydrogenpolysiloxane represented by the following formula and having at least three hydrogen atoms bonded to a silicon atom (SiH groups) in a non-end of the molecular chain (a middle of the molecular chain) in a molecule or having at least three in total of a hydrogen atom bonded to a silicone atom (SiH group) in a non-end of the molecular chain (a middle of the molecular chain) and a hydrogen atom bonded to a silicon atom (SiH group) at both ends of the molecular chain in one molecule, wherein the molecular main chain is composed of repetition of bifunctional organo(hydrogen)siloxane units or a copolymer of a bifunctional organo(hydrogen)siloxane unit and a bifunctional diorganosiloxane unit, and both ends of the molecular chain are blocked with a triorganosiloxy group or a diorgano(hydrogen)siloxy group (namely, an organo(hydrogen)polysiloxane blocked at both ends of the molecular chain with triorganosiloxy groups, a copolymer of diorganosiloxane and organo(hydrogen)siloxane blocked at both ends of the molecular chain with triorganosiloxy groups, diorganopolysiloxane blocked at both ends of the molecular chain with diorgano(hydrogen)siloxy groups, organo(hydrogen)polysiloxane blocked at both ends of the molecular chain with diorgano(hydrogen)siloxy groups, and a copolymer of diorganosiloxane and organo(hydrogen)siloxane blocked at both ends of the molecular chain with diorgano(hydrogen)siloxy groups) are suitably used.

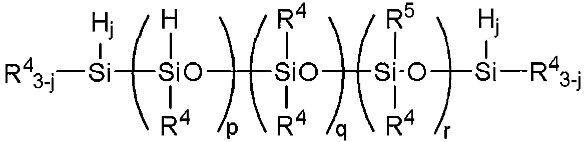

In the formula, R⁴ represents at least one type of groups selected from the same groups as R² and Rf in the formula (1), R⁵ represents at least one type of groups selected from the same groups as R³ in the formula (1), "j" represents 0 or 1, "p", "q", and "r" respectively represent an integer satisfying p ≥ 1, an integer satisfying q ≥ 0, and an integer satisfying r ≥ 0, preferably "p" represents an integer of 3 to 150, "q" represents an integer of 0 to 150, and "r" represents an integer of 0 to 75, and more preferably "p" represents an integer of 10 to 100, "q" represents an integer of 10 to 100, and "r" represents an integer of 0 to 50. "p" represents a number such that the number of hydrogen atoms bonded to a silicon atom (SiH groups) in a molecule is 3 or more.

Specific examples of the organohydrogenpolysiloxane of the component (B) include compounds represented by the following formulae.

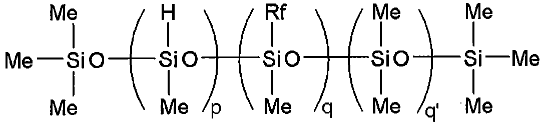

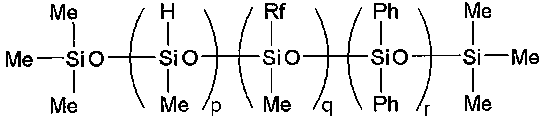

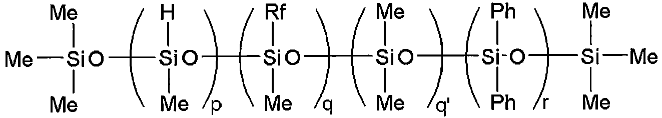

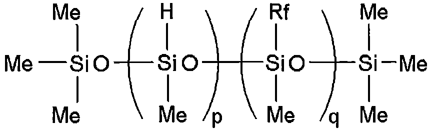

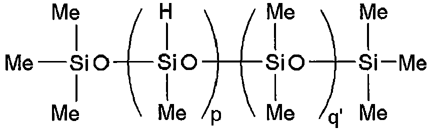

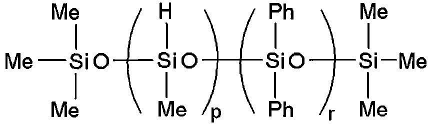

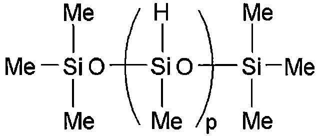

In the formulae, Me represents a methyl group, Ph represents a phenyl group, Rf, "p", and "q" have the same means as above, q' represents an integer of 1 to 100, "r" represents an integer of 1 to 50, and q'+r represents an integer of 2 to 150.

A blending amount of the organohydrogenpolysiloxane of the component (B) is an amount so that a mole ratio of the hydrogen atoms bonded to a silicon atom (the SiH groups) in the component (B) relative to the alkenyl groups in the component (A) is 0.1 to 15 (mol/mol), preferably 0.3 to 10, and more preferably 0.5 to 5. Both of a case where the mole ratio of the SiH groups in the component (B) relative to the alkenyl groups in the component (A) is less than 0.1 and a case where the mole ratio is more than 15 deteriorate curability of the target addition-curable releasing silicone composition for a silicone pressure sensitive adhesive or deteriorate physical properties of the cured product.

In the organohydrogenpolysiloxane of the component (B), a proportion of a total number of an aryl group and an aralkyl group relative to a total number of a monovalent substituent bonded to a silicon atom is preferably 0 to 50 mol%, particularly preferably 0 to 35 mol%, and further preferably 0 to 20 mol%. When the proportion of a total number of an aryl group and an aralkyl group relative to a total number of a monovalent substituent bonded to a silicon atom in the organohydrogenpolysiloxane of the component (B) is 50 mol% or less, compatibility with the component (A) becomes good, and curability of the target addition-curable releasing silicone composition for a silicone pressure sensitive adhesive and physical properties of the cured product also become good.

The organohydrogenpolysiloxane of the component (B) may be used singly, or may be used in combination of two or more thereof.

### Component (C)

The platinum-group metal catalyst of the component (C) is a catalyst to enhance the hydrosilylation reaction between the alkenyl groups in the component (A) and the SiH groups in the component (B), and known reaction catalysts may be used. Examples of the platinum-group metal catalyst as above include a platinum-type, palladium-type, or rhodium-type catalyst, and the platinum-type catalyst is particularly preferable among these. Examples of the platinum-type catalyst as above include chloroplatinic acid, an alcohol solution of chloroplatinic acid, and a complex between chloroplatinic acid and olefins or vinylsiloxane.

An addition amount of these platinum-group metal catalysts may be a catalytic amount, and is 0.5 to 5,000 ppm, preferably 1 to 1,000 ppm, and more preferably 5 to 300 ppm in terms of a mass of a platinum-group metal relative to the component (A) from the viewpoint of reactivity in obtaining the cured coating and from economic viewpoint. An addition amount of less than 0.5 ppm deteriorates the curability or deteriorates adhesiveness to the substrate. An addition amount of more than 5,000 ppm shortens the pot-life in a treatment bath.

### Component (D)

The component (D) is a non-fluorine solvent (namely, an organic solvent having no fluorine atom in a molecule). An SP value of this non-fluorine solvent is preferably 10.0 or less, more preferably 9.5 or less, and further preferably 9.0 or less. When the SP value of the non-fluorine solvent of the component (D) is 10.0 or less, the fluorine-containing organopolysiloxane of the component (A) can be sufficiently dissolved. A lower limit of the SP value is not particularly limited, and may be 5.0 or more, preferably 6.0 or more, and further preferably 7.0 or more, for example.

The non-fluorine solvent of the component (D) is preferably a hydrocarbon solvent, a ketone solvent, an ether solvent, or an ester solvent. Specific examples thereof include: aliphatic hydrocarbon solvents such as hexane, heptane, octane, isooctane, nonane, isononane, decane, cyclohexane, methylcyclohexane, petroleum benzine, ligroin, industrial gasoline, and naphtha solvent; aromatic hydrocarbon solvents such as toluene and xylene; ketone solvents such as acetone, methyl ethyl ketone, 2-pentanone, 3-pentanone, 2-hexanone, 3-hexanone, 2-heptanone, 3-heptanone, 4-heptanone, methyl isobutyl ketone, diisobutyl ketone, and cyclohexanone; ester solvents such as methyl acetate, ethyl acetate, propyl acetate, isopropyl acetate, butyl acetate, isobutyl acetate, and methyl propionate; and ether solvents such as diethyl ether, dipropyl ether, diisopropyl ether, dibutyl ether, 1,2-dimethoxyethane, and 1,4-dioxane. These may be used singly or in combination of two or more thereof.

A use amount of the non-halogen solvent of the component (D) is preferably an amount so that a viscosity of the silicone composition after dilution is 100 cp or less from the viewpoints of operability in applying the silicone composition dissolved by using this non-halogen solvent, ease of controlling the applying amount, etc. The use amount is 100 to 20,000 parts by mass, preferably 500 to 15,000 parts by mass, more preferably 800 to 12,000 parts by mass, and further preferably 1,000 to 3,000 parts by mass relative to 100 parts by mass of the component (A).

### Other Components

The addition-curable releasing silicone composition for a silicone pressure sensitive adhesive of the present invention is obtained by blending the above components (A) to (D) at the predetermined amounts. In addition to the above components, other optional components, for example, an activity controlling agent such as an organonitrogen compound, an organophosphorus compound, an organosilicon compound, an acetylene compound, and an oxime compound may be added for a purpose of controlling the catalytic activity of the platinum-group metal catalyst. Among the activity controlling agents, an acetylene compound such as 3-methyl-1-butyn-3-ol and a silylated derivative thereof, and a silicon compound such as divinyltetramethyldisiloxane and tetravinyltetramethylcyclotetrasiloxane are preferably used.

A blending amount of the activity controlling agent is preferably 0.05 to 3 parts relative to 100 parts of the component (A). The blending amount of 0.05 parts or more prevents gelation of the target silicone composition, and the blending amount of 3 parts or less prevents inhibition of curing of the silicone composition. Addition amount of the other optional component may be normal amount according to the purpose.

### Preparation of Addition-Curable Releasing Silicone Composition for Silicone Pressure Sensitive Adhesive

For preparing the addition-curable releasing silicone composition for a silicone pressure sensitive adhesive of the present invention, it is preferable that the components (A), (B), and (D) be uniformly mixed in advance, and then the component (C) be added immediately before use. Each of the components may be used singly or in combination of two or more thereof.

### Silicone Cured Coating

As a substrate to be coated with the addition-curable releasing silicone composition for a silicone pressure sensitive adhesive of the present invention, paper, plastic film, metal, cloth, glass, etc. is selected. Examples of the plastic film include polyester, polypropylene, polyethylene, polystyrene, polycarbonate, polyvinyl alcohol, ethylene-vinyl acetate copolymer, ethylene-vinyl alcohol copolymer, polyvinyl chloride, polyvinylidene chloride, polytetrafluoroethylene, polyimide, polyamide, and polyphenylene sulfide. Examples of the paper include: paper substrates such as glassine paper, craft paper, and clay-coated paper; and laminated paper substrates such as polyethylene-laminated woodfree paper and polyethylene-laminated craft paper. Examples of the metal include aluminum foil, copper foil, gold foil, and silver foil. Examples of the cloth include natural fabric cloth, synthetic fabric cloth, and artificial leather. As for the glass, a thickness, a type, etc. thereof are not particularly limited, and the glass may be subjected to a chemically reinforcing treatment, a surface treatment, etc. Glass fiber may also be applied.

As a method for applying the addition-curable releasing silicone composition for a silicone pressure sensitive adhesive on these substrates, known methods such as a bar coater, a roll coater, a gravure coater, a knife coater, a blade coater, a spin coater, dip coating, and cast applying may be used.

A curing condition for the addition-curable releasing silicone composition for a silicone pressure sensitive adhesive of the present invention includes a method in which the substrate coated with the silicone composition is heated at a temperature of 80 to 250°C for 1 to 120 seconds, or after the non-halogen solvent is evaporated, the composition is irradiated with ultraviolet ray from an ultraviolet ray irradiation apparatus such as a high-pressure mercury lamp for 0.2 seconds or longer for curing, but the method is not limited thereto.

The addition-curable releasing silicone composition for a silicone pressure sensitive adhesive of the present invention yields the cured coating having excellent coatability on the substrate, adhesiveness, and releasability, and thereby the composition is suitable for release paper for a pressure sensitive adhesive tape and a pressure sensitive adhesive label. In addition, the composition can be suitably used for a releasability for a mold for molding rubber, plastic, etc., a fiber treating agent for paper, cloth, etc., a water repellent agent, an oil repellent agent, or a heat-resistant coating for food packaging, etc.

### Release Film

Accordingly, the present invention provides a release film including: a film substrate; and a cured product layer of the addition-curable releasing silicone composition for a silicone pressure sensitive adhesive formed on an outer surface of at least one side of the film substrate. The release film as above can provide the release film having excellent releasability.

### Release Paper

In addition, the present invention provides a release paper including: a paper substrate; and a cured product layer of the addition-curable releasing silicone composition for a silicone pressure sensitive adhesive formed on an outer surface of at least one side of the paper substrate. The release paper as above can provide the release paper having excellent releasability.

### EXAMPLE

Hereinafter, the present invention will be specifically described with showing Examples and Comparative Examples, but the present invention is not limited to the following Examples. Note that "parts" means "parts by mass".

### Molecular-Weight Distribution Measurement

Molecular weight distribution of a fluorine-containing organopolysiloxane of the component (A) was measured under the following condition by using gel permeation chromatography (GPC) to calculate a proportion (%) of an area of a component having a molecular weight of 4,000 or less relative to a total peak area in the molecular-weight distribution measurement by GPC of each fluorine-containing organopolysiloxane.

### Measurement Condition

Developing solvent: Hydrochlorofluorocarbon (HCFC)-225
Flow rate: 1 mL/min
Detector: Evaporative light-scattering detector
Column: Used were two columns of TSKgel Multipore HXL-M (7.8 mmφ × 30 cm), available from Tosoh Corporation.
Column temperature: 35°C
Amount of sample injection: 100 µL (a solution at a concentration of 0.1 mass%)
Standard sample: PMMA CALIBRATION KIT M-L-10, available from Agilent Technologies, Inc.

### (Synthesis Example 1) Synthesis of Fluorine-Containing Organopolysiloxane (A-1)

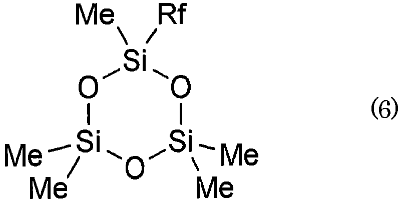

Me represents a methyl group (the same applies hereinafter).

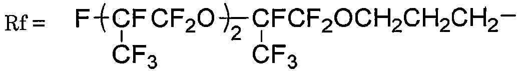

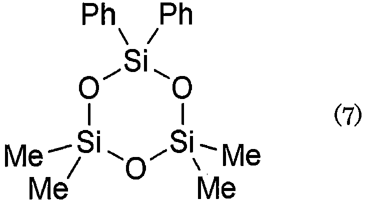

Ph represents a phenyl group (the same applies hereinafter).

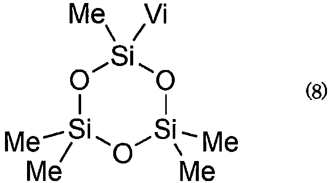

Vi represents a vinyl group (the same applies hereinafter).

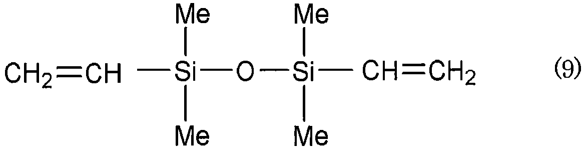

Mixing and stirring 100 parts of cyclotrisiloxane (6) having a fluorine-containing substituent, 4.7 parts of cyclomethylphenyltrisiloxane (7), 0.29 parts of cyclomethylvinyltrisiloxane (8), and 0.23 parts of 1,1,3,3-tetramethyl-1,3-divinyldisiloxane (9) were performed, and 0.01 part of trifluoromethanesulfonic acid was added to allow a reaction (equilibration) at 50°C. Thereafter, 0.2 parts of 28% aqueous ammonia was added, the mixture was stirred at room temperature for 1 hour, a generated salt was filtered with filter paper, stripping was performed at 200°C and 3 mmHg for 30 minutes, and then GPC measurement was performed. When the area of a component having a molecular weight of 4,000 or less in the GPC measurement was not within a range of 2 to 20% of the total peak area, the stripping was performed again under the same condition, and GPC measurement was performed. This procedure was repeated until the area of a component having a molecular weight of 4,000 or less was within the range of 2 to 20% of the total peak area in the GPC measurement to obtain a fluorine-containing organopolysiloxane (A-1) in Table 1. This fluorine-containing organopolysiloxane had a fluorine content of 42 mass%, a proportion of a total number of phenyl groups relative to a total number of monovalent substituents bonded to a silicon atom being 3.0%, and the area of a component having a molecular weight of 4,000 or less in the total peak area in the GPC measurement being 17%.

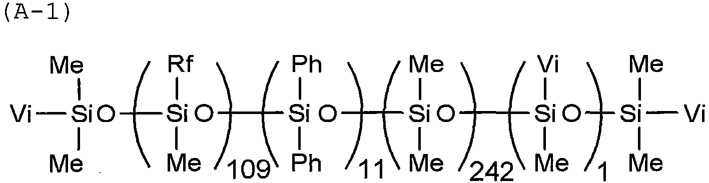

### (Synthesis Example 2) Synthesis of Fluorine-Containing Organopolysiloxane (A-2)

A fluorine-containing organopolysiloxane (A-2) was synthesized in the same manner as in Synthesis Example 1 except that 100 parts of cyclotrisiloxane (6) having a fluorine-containing substituent, 46.4 parts of cyclomethylphenyltrisiloxane (7), 0.53 parts of cyclomethylvinyltrisiloxane (8), and 0.42 parts of 1,1,3,3-tetramethyl-1,3-divinyldisiloxane (9) were used. This fluorine-containing organopolysiloxane had a fluorine content of 30 mass%, a proportion of a total number of phenyl groups relative to a total number of monovalent substituents bonded to a silicon atom being 16.2%, and the area of a component having a molecular weight of 4,000 or less in the total peak area in the GPC measurement being 11%.

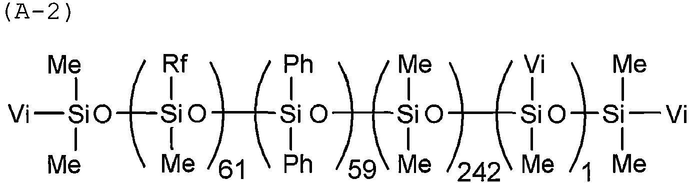

### (Synthesis Example 3) Synthesis of Fluorine-Containing Organopolysiloxane (A-3)

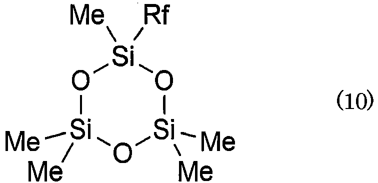

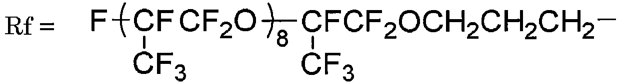

A fluorine-containing organopolysiloxane (A-3) was synthesized in the same manner as in Synthesis Example 1 except that 100 parts of cyclotrisiloxane (10) having a fluorine-containing substituent, 26.4 parts of cyclomethylphenyltrisiloxane (7), 0.26 parts of cyclomethylvinyltrisiloxane (8), and 0.21 parts of 1,1,3,3-tetramethyl-1,3-divinyldisiloxane (9) were used. This fluorine-containing organopolysiloxane had a fluorine content of 46 mass%, a proportion of a total number of phenyl groups relative to a total number of monovalent substituents bonded to a silicon atom being 18.6%, and the area of a component having a molecular weight of 4,000 or less in the total peak area in the GPC measurement being 6%.

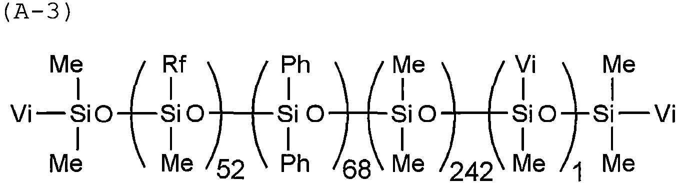

### (Synthesis Example 4) Synthesis of Fluorine-Containing Organopolysiloxane (A-4)

A fluorine-containing organopolysiloxane (A-4) was synthesized in the same manner as in Synthesis Example 1 except that 100 parts of cyclotrisiloxane (10) having a fluorine-containing substituent, 11.9 parts of cyclomethylphenyltrisiloxane (7), 0.18 parts of cyclomethylvinyltrisiloxane (8), and 0.14 parts of 1,1,3,3-tetramethyl-1,3-divinyldisiloxane (9) were used. This fluorine-containing organopolysiloxane had a fluorine content of 52 mass%, a proportion of a total number of phenyl groups relative to a total number of monovalent substituents bonded to a silicon atom being 12.3%, and the area of a component having a molecular weight of 4,000 or less in the total peak area in the GPC measurement being 9%.

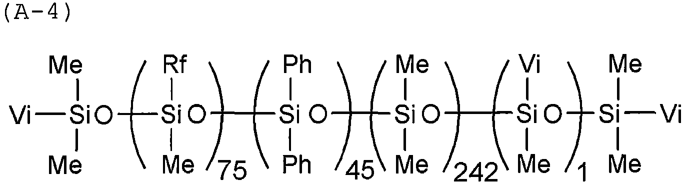

### (Synthesis Example 5) Synthesis of Fluorine-Containing Organopolysiloxane (A-5)

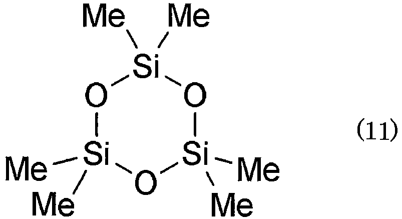

A fluorine-containing organopolysiloxane (A-5) was synthesized in the same manner as in Synthesis Example 1 except that 100 parts of cyclotrisiloxane (6) having a fluorine-containing substituent, 77.1 parts of cyclomethylphenyltrisiloxane (7), 1.34 parts of cyclomethylvinyltrisiloxane (8), 1.06 parts of 1,1,3,3-tetramethyl-1,3-divinyldisiloxane (9), and 74.8 parts of cyclodimethyltrisiloxane (11) were used. This fluorine-containing organopolysiloxane had a fluorine content of 15 mass%, a proportion of a total number of phenyl groups relative to a total number of monovalent substituents bonded to a silicon atom being 10.7%, and the area of a component having a molecular weight of 4,000 or less in the total peak area in the GPC measurement being 16%.

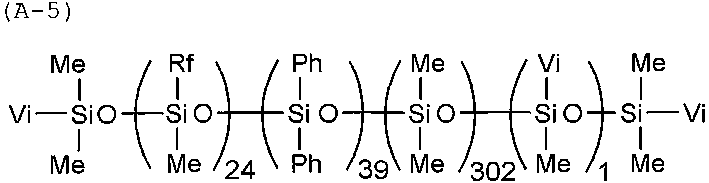

### (Synthesis Example 6) Synthesis of Fluorine-Containing Organopolysiloxane (A-6)

A fluorine-containing organopolysiloxane (A-6) was synthesized in the same manner as in Synthesis Example 1 except that 100 parts of cyclotrisiloxane (10) having a fluorine-containing substituent, 0.31 parts of cyclomethylvinyltrisiloxane (8), 0.25 parts of 1,1,3,3-tetramethyl-1,3-divinyldisiloxane (9), and 4.7 parts of cyclodimethyltrisiloxane (11) were used. This fluorine-containing organopolysiloxane had a fluorine content of 42 mass%, a proportion of a total number of phenyl groups relative to a total number of monovalent substituents bonded to a silicon atom being 0.0%, and the area of a component having a molecular weight of 4,000 or less in the total peak area in the GPC measurement being 10%.

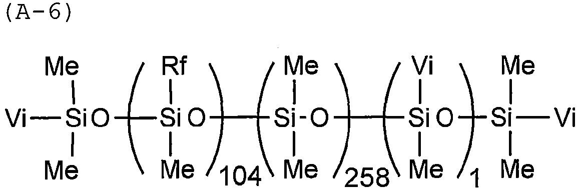

### (Synthesis Example 7) Synthesis of Fluorine-Containing Organopolysiloxane (A-7)

A fluorine-containing organopolysiloxane (A-7) was synthesized in the same manner as in Synthesis Example 1 except that 100 parts of cyclotrisiloxane (10) having a fluorine-containing substituent, 38.3 parts of cyclomethylphenyltrisiloxane (7), 0.33 parts of cyclomethylvinyltrisiloxane (8), and 0.26 parts of 1,1,3,3-tetramethyl-1,3-divinyldisiloxane (9) were used. This fluorine-containing organopolysiloxane had a fluorine content of 42 mass%, a proportion of a total number of phenyl groups relative to a total number of monovalent substituents bonded to a silicon atom being 21.6%, and the area of a component having a molecular weight of 4,000 or less in the total peak area in the GPC measurement being 13%.

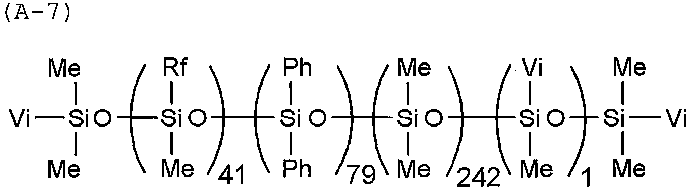

### (Synthesis Example 8) Synthesis of Fluorine-Containing Organopolysiloxane (A-8)

A fluorine-containing organopolysiloxane (A-8) was synthesized in the same manner as in Synthesis Example 1 except that the procedure was repeated until the area of a component having a molecular weight of 4,000 or less in the GPC was less than 2% of the total peak area. This fluorine-containing organopolysiloxane had a fluorine content of 42 mass%, a proportion of a total number of phenyl groups relative to a total number of monovalent substituents bonded to a silicon atom being 3.0%, and the area of a component having a molecular weight of 4,000 or less in the total peak area in the GPC measurement being 1.3%.

### (Synthesis Example 9) Synthesis of Fluorine-Containing Organopolysiloxane (A-9)

A fluorine-containing organopolysiloxane (A-9) was synthesized in the same manner as in Synthesis Example 1 except that the stripping condition was at 100°C and 30 mmHg for only 30 minutes. This fluorine-containing organopolysiloxane had a fluorine content of 44.0 mass%, a proportion of a total number of phenyl groups relative to a total number of monovalent substituents bonded to a silicon atom being 3.0%, and the area of a component having a molecular weight of 4,000 or less in the total peak area in the GPC measurement being 25%.

Table 1 summarizes the parameters of the fluorine-containing organopolysiloxanes (A-1) to (A-9)

**[Table 1]**

| The parameters of the fluorine-containing organopolysiloxanes (A-1) to (A-9) | | | | | | | | | |
|---|---|---|---|---|---|---|---|---|---|
| | A-1 | A-2 | A-3 | A-4 | A-5 | A-6 | A-7 | A-8 | A-9 |
| Parameter 1 | 42 | 30 | 46 | 52 | 15 | 42 | 42 | 42 | 44 |
| Parameter 2 | 3.0 | 16.2 | 18.6 | 12.3 | 10.7 | 0.0 | 21.6 | 3.0 | 3.0 |
| Parameter 3 | 17 | 11 | 6 | 9 | 16 | 10 | 13 | 1.3 | 25 |

| | | | | | | | | | |
|---|---|---|---|---|---|---|---|---|---|
| Parameter 1: The fluorine content rate (mass%) Parameter 2: The proportion of the total number of phenyl groups relative to the total number of monovalent substituents bonded to a silicon atom (mol%) Parameter 3: The proportion of the area of a component having a molecular weight of 4,000 or less relative to the total peak area in the molecular-weight distribution measurement by the GPC analysis (%) | | | | | | | | | |

### (Synthesis Example 10) Synthesis of Fluorine-Containing Organohydrogenpolysiloxane (B-1)

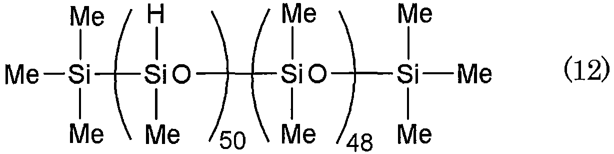

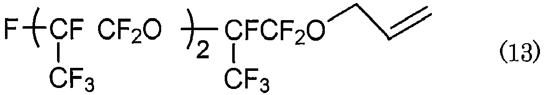

Mixing and stirring 100 parts of organohydrogenpolysiloxane (12) and 194 parts of an ally ether of perfluoropolyether (13) were performed, and an addition reaction was advanced with a platinum vinylsiloxane complex CAT-PL-50T (available from Shin-Etsu Chemical Co., Ltd.) as a catalyst. An active carbon treatment, filtration, and stripping were performed to obtain a fluorine-containing organohydrogenpolysiloxane (B-1) represented by the following molecular formula.

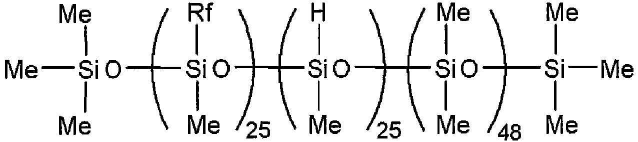

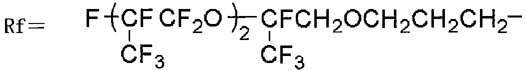

### (Examples 1 to 3 and Comparative Examples 1 to 6)

Into each of the organopolysiloxanes having an alkenyl substituent and a fluorine-containing substituent, represented by the above (A-1) to (A-9), the organohydrogenpolysiloxane (B-1) was mixed so that a mole ratio of hydrogen atoms bonded to a silicon atom in the component (B) relative to vinyl groups in the component (A) (a mole ratio of Si-H groups / Si-CH=CH₂ groups) was 3.0 to prepare a mixture. Diluting 100 parts of this mixture was performed with 1,900 parts of a non-halogen solvent (isooctane : isobutyl acetate = 1:1), and into this mixture, a complex salt between chloroplatinic acid and vinylsiloxane was added at 30 ppm in terms of a platinum mass relative to the component (A) (Tables 2 and 3).

**[Table 2]**

| Example | | 1 | 2 | 3 |
|---|---|---|---|---|
| Component (A) | A-1 | 94.3 parts | | |
| | A-2 | | 92.9 parts | |
| | A-3 | | | 95.8 parts |
| Component (B) | B-1 | 5.7 parts | 7.1 parts | 4.2 parts |
| H/Vi | | 3.0 | 3.0 | 3.0 |
| Component (C) | Chloroplatinic acid (platnium amount) | 30 ppm | 30 ppm | 30 ppm |
| Component (D) | Isooctane | 950 parts | 950 parts | 950 parts |
| | Isobutyl acetate | 950 parts | 950 parts | 950 parts |

**[Table 3]**

| Comparative Example | | 1 | 2 | 3 | 4 | 5 | 6 |
|---|---|---|---|---|---|---|---|
| Component (A) | A-4 | 96.4 parts | | | | | |
| | A-5 | | 89.8 parts | | | | |
| | A-6 | | | 94.1 parts | | | |
| | A-7 | | | | 95.2 parts | | |
| | A-8 | | | | | 94.3 parts | |
| | A-9 | | | | | | 94.3 parts |
| Component (B) | B-1 | 3.6 parts | 10.2 parts | 5.9 parts | 4.8 parts | 5.7 parts | 5.7 parts |
| H/Vi | | 3.0 | 3.0 | 3.0 | 3.0 | 3.0 | 3.0 |
| Component (C) | Chloroplatinic acid (platnium amount) | 30 ppm | 30 ppm | 30 ppm | 30 ppm | 30 ppm | 30 ppm |
| Component (D) | Isooctane | 950 parts | 950 parts | 950 parts | 950 parts | 950 parts | 950 parts |
| | Isobutyl acetate | 950 parts | 950 parts | 950 parts | 950 parts | 950 parts | 950 parts |

Of the silicone composition solutions obtained as above, solubility in the non-fluorine solvent, coatability on a film substrate, adhesiveness, a releasing force, and a residual adhesion force were measured by the following methods. Table 4 shows the results.

### (a) Solubility

Into a 100-ml transparent glass vial with a lid, 50 g of the sample prepared in the Examples and Comparative Examples (solid-content concentration: 5%) was collected. This vial was shaken for 5 minutes with a shaking machine, and then appearance of the sample was observed. Good: Transparent; Fair: Slightly cloudy; Poor: Cloudy in white or separated

### (b) Coatability on Film Substrate

The sample prepared in the Examples and Comparative Examples (dilution solvent: isooctane / isobutyl acetate = 50:50) was applied on a PET film with 50 µm in thickness by using a bar coater so that the applying amount was 0.3 g/m². The appearance of the film after applying was observed.
Good: Liquid repellency and coating unevenness were absent.
Fair: A little liquid repellency or coating unevenness was present.
Poor: Liquid repellency or coating unevenness were present.

### (c) Adhesiveness to Substrate

The film obtained in the (b) was heated and cured for 60 seconds in a hot-air drying apparatus at 150°C to form a release layer. The film with the formed release layer was stored at 60°C and 90 RH% for three days. Then, the release layer was scratched with a finger ten times, and whether the release layer was peeled was visually observed.
Good: No peeling occurred.
Fair: Color of the coating changed but no peeling occurred.
Poor: Peeling occurred.

### (d) Releasing Force by Transferring Method

Into 100 parts by mass of an addition-curable silicone pressure sensitive adhesive (Shin-Etsu Chemical Co., Ltd.: KR-3701), 50 parts by mass of toluene was added, and a complex salt between chloroplatinic acid and vinylsiloxane was added so that the platinum content was 30 ppm to prepare a composition. This composition was applied on the release layer of the film obtained in (c) (width: 25 mm) by using an applicator so that a thickness after curing was 50 µm, and then the composition was heated and cured under a condition at 150°C for 1 minute. A PET film having a thickness of 50 µm (width: 25 mm) was adhered to the pressure sensitive adhesive layer to obtain a pressure sensitive adhesive tape having the release layer. The obtained pressure sensitive adhesive tape having the release layer was adhered under a load of 20 g/cm² at 25°C or 70°C for each 20 hours for aging. The PET film on the pressure sensitive adhesive layer side of the pressure sensitive adhesive tape having the release layer was released by using a tensile tester at an angle of 180 degrees and a releasing rate of 0.3 m/min to measure a force (N/25-mm) required for releasing.
Good: less than 0.3 N/25-mm
Fair: 0.3 N/25-mm or more and less than 1.0 N/25-mm
Poor: 1.0 N/25-mm or more

### (e) Residual Adhesion Force

A pressure sensitive adhesive tape having a release layer was produced by the same method as in (d), and adhered under a load of 20 g/cm² at 25°C for 20 hours for aging. After the aging, the PET film on the pressure sensitive adhesive layer side of the pressure sensitive adhesive tape having the release layer was released and adhered to a SUS plate. This pressure sensitive adhesive tape was released by using a tensile tester at an angle of 180 degrees and a releasing rate of 0.3 m/min to measure a force (N/25-mm) required for releasing.
Good: 9 N/25-mm or more
Fair: less than 9 N/25-mm and 5 N/25-mm or more
Poor: less than 5 N/25-mm

**[Table 4]**

| Sample | Solubility | Coatability | Adhesiveness | Releasing force [N/25-mm] | | Residual adhesive force [N/25-mm] |
|---|---|---|---|---|---|---|
| | | | | 25°C/one-day | 70°C/one-day | |
| Example 1 | Good | Good | Good | Good 0.17 | Good 0.21 | Good 10.2 |
| Example 2 | Good | Good | Good | Good 0.28 | Good 0.29 | Good 10.0 |
| Example 3 | Good | Good | Good | Good 0.15 | Good 0.18 | Good 10.3 |
| Comparative Example 1 | Poor | - | - | - | - | - |
| Comparative Example 2 | Good | Good | Good | Poor 4.12 | Poor 4.86 | Poor 1.33 |
| Comparative Example 3 | Good | Good | Fair | Fair 0.35 | Fair 0.38 | Good 10.0 |
| Comparative Example 4 | Good | Good | Poor | Good 0.15 | Good 0.17 | Good 10.4 |
| Comparative Example 5 | Fair | Fair | - | - | - | - |
| Comparative Example 6 | Good | Good | Fair | Good 0.13 | Good 0.16 | Fair 6.4 |

For Comparative Example 1, the fluorine-containing organopolysiloxane (A-4) was insoluble in the non-fluorine solvent, and thereby the coatability, the adhesiveness, the releasing force, and the residual adhesion force were unmeasurable. The fluorine-containing organopolysiloxane (A-5) in Comparative Example 2 had a fluorine content of less than 25 mass%, leading to a heavy releasing force and a low residual adhesion force. The fluorine-containing organopolysiloxane (A-6) in Comparative Example 3 had a phenyl group content rate of less than 0.1 mol%, leading to deteriorated adhesiveness and a high releasing force. The fluorine-containing organopolysiloxane (A-7) in Comparative Example 4 had a phenyl group content rate of more than 20 mol%, leading to deteriorated adhesiveness. The fluorine-containing organopolysiloxane (A-8) in Comparative Example 5 had the proportion of the area of a component having a molecular weight of 4,000 or less relative to the total peak area in the GPC measurement being less than 2%, leading to poor solubility and coatability, and the releasing force and the residual adhesion force were unmeasurable. The fluorine-containing organopolysiloxane (A-9) in Comparative Example 6 had the proportion of the area of a component having a molecular weight of 4,000 or less relative to the total peak area in the GPC measurement being more than 20%, leading to deteriorated adhesiveness and decrease in the residual adhesion force.

Compared with these Comparative Examples, the samples of Examples 1 to 3 resulted in excellent solubility in the non-fluorine solvent, coatability on the substrate, and adhesiveness, light releasing against the silicone pressure sensitive adhesive, and the high residual adhesion force. The addition-curable releasing silicone composition for a silicone pressure sensitive adhesive of the present invention consequently demonstrated significant importance of the fluorine content, the content of aryl groups and aralkyl groups, and the amount of a component having a molecular weight of 4,000 or less of the component (A) being the base polymer, as the releasing agent for a silicone pressure sensitive adhesive.

The present description includes the following embodiments.

[1]: An addition-curable releasing silicone composition for a silicone pressure sensitive adhesive, the composition comprising:
   (A) a fluorine-containing organopolysiloxane at 100 parts by mass, the fluorine-containing organopolysiloxane having at least two alkenyl groups bonded to a silicon atom in one molecule, at least one fluorine-containing substituent bonded to a silicon atom, and at least one aryl group and/or aralkyl group bonded to a silicon atom, wherein a fluorine content is 25 to 50 mass%, a proportion of a total number of the aryl group and the aralkyl group relative to a total number of a monovalent substituent bonded to a silicon atom is 0.1 to 20 mol%, and in molecular-weight distribution measurement by gel permeation chromatography analysis, an area of a component having a molecular weight of 4,000 or less accounts for 2 to 20% of a total peak area;
   (B) an organohydrogenpolysiloxane having at least three hydrogen atoms bonded to a silicon atom (SiH groups) in one molecule at an amount so that a mole ratio of the hydrogen atoms bonded to a silicon atom (the SiH groups) in the component (B) relative to the alkenyl groups in the component (A) is 0.1 to 15;
   (C) a platinum-group metal catalyst at 0.5 to 5,000 ppm in terms of mass of a platinum-group metal relative to the component (A); and
   (D) a non-fluorine solvent at 100 to 20,000 parts by mass.
[2]: The addition-curable releasing silicone composition for a silicone pressure sensitive adhesive according to [1], wherein the mole ratio of the hydrogen atoms bonded to a silicon atom (the SiH groups) in the component (B) relative to the alkenyl groups in the component (A) is 0.5 to 5.
[3]: The addition-curable releasing silicone composition for a silicone pressure sensitive adhesive according to [1] or [2], wherein, in the component (B), a ratio of a total number of an aryl group and an aralkyl group relative to a total number of a monovalent substituent bonded to a silicon atom is 0 to 50 mol%.
[4]: The addition-curable releasing silicone composition for a silicone pressure sensitive adhesive according to any one of [1] to [3], wherein the component (D) is a non-fluorine solvent having an SP value of 10.0 or less.
[5]: The addition-curable releasing silicone composition for a silicone pressure sensitive adhesive according to any one of [1] to [4], wherein the component (D) is at least one selected from the group consisting of a hydrocarbon solvent, a ketone solvent, an ether solvent, and an ester solvent.
[6]: A release film, comprising: a film substrate; and a cured product layer of the addition-curable releasing silicone composition for a silicone pressure sensitive adhesive according to any one of [1] to [5] formed on an outer surface of at least one side of the film substrate.
[7]: A release paper, comprising: a paper substrate; and a cured product layer of the addition-curable releasing silicone composition for a silicone pressure sensitive adhesive according to any one of [1] to [5] formed on an outer surface of at least one side of the paper substrate.

The present invention will be expressed from further another different viewpoints as the following <1> to <16>.
<1> An addition-curable releasing silicone composition for a silicone pressure sensitive adhesive, the composition including:
   (A) a fluorine-containing organopolysiloxane having at least one alkenyl group bonded to a silicon atom in one molecule, at least one fluorine-containing substituent bonded to a silicon atom, and at least one aryl group and/or aralkyl group bonded to a silicon atom, wherein a fluorine content is 25 to 50 mass%;
   (B) an organohydrogenpolysiloxane having at least one hydrogen atom bonded to a silicon atom (a SiH group) in one molecule;
   (C) a platinum-group metal catalyst; and
   (D) a non-fluorine solvent.
<2> An addition-curable releasing silicone composition for a silicone pressure sensitive adhesive, the composition including:
   (A) a fluorine-containing organopolysiloxane having at least one alkenyl group bonded to a silicon atom in one molecule, at least one fluorine-containing substituent bonded to a silicon atom, and at least one aryl group and/or aralkyl group bonded to a silicon atom, wherein a proportion of a total number of the aryl group and the aralkyl group relative to a total number of a monovalent substituent bonded to a silicon atom is 0.1 to 20 mol%;
   (B) an organohydrogenpolysiloxane having at least one hydrogen atom bonded to a silicon atom (a SiH group) in one molecule;
   (C) a platinum-group metal catalyst; and
   (D) a non-fluorine solvent.
<3> An addition-curable releasing silicone composition for a silicone pressure sensitive adhesive, the composition including:
   (A) a fluorine-containing organopolysiloxane having at least one alkenyl group bonded to a silicon atom in one molecule, at least one fluorine-containing substituent bonded to a silicon atom, and at least one aryl group and/or aralkyl group bonded to a silicon atom, wherein, in molecular-weight distribution measurement by gel permeation chromatography analysis, an area of a component having a molecular weight of 4,000 or less accounts for 2 to 20% of a total peak area;
   (B) an organohydrogenpolysiloxane having at least one hydrogen atom bonded to a silicon atom (a SiH group) in one molecule;
   (C) a platinum-group metal catalyst; and
   (D) a non-fluorine solvent.
<4> The addition-curable releasing silicone composition for a silicone pressure sensitive adhesive according to any one of <1> to <3>, wherein the mole ratio of the hydrogen atoms bonded to a silicon atom (the SiH group) in the component (B) relative to the alkenyl group in the component (A) is 0.5 to 5.
<5> The addition-curable releasing silicone composition for a silicone pressure sensitive adhesive according to any one of <1> to <3>, wherein, in the component (B), a ratio of a total number of an aryl group and an aralkyl group relative to a total number of a monovalent substituent bonded to a silicon atom is 0 to 50 mol%.
<6> The addition-curable releasing silicone composition for a silicone pressure sensitive adhesive according to any one of <1> to <3>, wherein the component (D) is a non-fluorine solvent having an SP value of 10.0 or less.
<7> The addition-curable releasing silicone composition for a silicone pressure sensitive adhesive according to <4>, wherein the component (D) is a non-fluorine solvent having an SP value of 10.0 or less.
<8> The addition-curable releasing silicone composition for a silicone pressure sensitive adhesive according to <5>, wherein the component (D) is a non-fluorine solvent having an SP value of 10.0 or less.
<9> The addition-curable releasing silicone composition for a silicone pressure sensitive adhesive according to any one of <1> to <3>, wherein the component (D) is at least one selected from the group consisting of a hydrocarbon solvent, a ketone solvent, an ether solvent, and an ester solvent.
<10> The addition-curable releasing silicone composition for a silicone pressure sensitive adhesive according to <4>, wherein the component (D) is at least one selected from the group consisting of a hydrocarbon solvent, a ketone solvent, an ether solvent, and an ester solvent.
<11> The addition-curable releasing silicone composition for a silicone pressure sensitive adhesive according to <5>, wherein the component (D) is at least one selected from the group consisting of a hydrocarbon solvent, a ketone solvent, an ether solvent, and an ester solvent.
<12> The addition-curable releasing silicone composition for a silicone pressure sensitive adhesive according to <6>, wherein the component (D) is at least one selected from the group consisting of a hydrocarbon solvent, a ketone solvent, an ether solvent, and an ester solvent.
<13> The addition-curable releasing silicone composition for a silicone pressure sensitive adhesive according to <7>, wherein the component (D) is at least one selected from the group consisting of a hydrocarbon solvent, a ketone solvent, an ether solvent, and an ester solvent.
<14> The addition-curable releasing silicone composition for a silicone pressure sensitive adhesive according to <8>, wherein the component (D) is at least one selected from the group consisting of a hydrocarbon solvent, a ketone solvent, an ether solvent, and an ester solvent.
<15> A release film, including:
   a film substrate; and
   a cured product layer of the addition-curable releasing silicone composition for a silicone pressure sensitive adhesive according to any one of <1> to <14> formed on an outer surface of at least one side of the film substrate.
<16> A release paper, including:
   a paper substrate; and
   a cured product layer of the addition-curable releasing silicone composition for a silicone pressure sensitive adhesive according to any one of <1> to <14> formed on an outer surface of at least one side of the paper substrate.

In the above <1> to <16>, changing the blending ratio between the components may change the balance between the properties. In such a case, some properties are destabilized or deteriorated, but such a case can be practically used according to application because the required properties vary depending on the application.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

### INDUSTRIAL APPLICABILITY

The addition-curable releasing silicone composition for a silicone pressure sensitive adhesive of the present invention has both of high handling properties and good releasing performance, and therefore is suitably usable as a releasing agent. The sheet-shaped substrate having the cured coating composed of this silicone composition is useful for the pressure sensitive adhesive tape, the pressure sensitive adhesive label, the process paper, etc.

## Claims

1. An addition-curable releasing silicone composition for a silicone pressure sensitive adhesive, the composition comprising:
(A) a fluorine-containing organopolysiloxane at 100 parts by mass, the fluorine-containing organopolysiloxane having at least two alkenyl groups bonded to a silicon atom in one molecule, at least one fluorine-containing substituent bonded to a silicon atom, and at least one aryl group and/or aralkyl group bonded to a silicon atom, wherein a fluorine content is 25 to 50 mass%, a proportion of a total number of the aryl group and the aralkyl group relative to a total number of a monovalent substituent bonded to a silicon atom is 0.1 to 20 mol%, and in molecular-weight distribution measurement by gel permeation chromatography analysis, an area of a component having a molecular weight of 4,000 or less accounts for 2 to 20% of a total peak area;
(B) an organohydrogenpolysiloxane having at least three hydrogen atoms bonded to a silicon atom (SiH groups) in one molecule at an amount so that a mole ratio of the hydrogen atoms bonded to a silicon atom (the SiH groups) in the component (B) relative to the alkenyl groups in the component (A) is 0.1 to 15;
(C) a platinum-group metal catalyst at 0.5 to 5,000 ppm in terms of mass of a platinum-group metal relative to the component (A); and
(D) a non-fluorine solvent at 100 to 20,000 parts by mass.

2. The addition-curable releasing silicone composition for a silicone pressure sensitive adhesive according to claim 1, wherein the mole ratio of the hydrogen atoms bonded to a silicon atom (the SiH groups) in the component (B) relative to the alkenyl groups in the component (A) is 0.5 to 5.

3. The addition-curable releasing silicone composition for a silicone pressure sensitive adhesive according to claim 1, wherein, in the component (B), a ratio of a total number of an aryl group and an aralkyl group relative to a total number of a monovalent substituent bonded to a silicon atom is 0 to 50 mol%.

4. The addition-curable releasing silicone composition for a silicone pressure sensitive adhesive according to claim 1, wherein the component (D) is a non-fluorine solvent having an SP value of 10.0 or less.

5. The addition-curable releasing silicone composition for a silicone pressure sensitive adhesive according to claim 2, wherein the component (D) is a non-fluorine solvent having an SP value of 10.0 or less.

6. The addition-curable releasing silicone composition for a silicone pressure sensitive adhesive according to claim 3, wherein the component (D) is a non-fluorine solvent having an SP value of 10.0 or less.

7. The addition-curable releasing silicone composition for a silicone pressure sensitive adhesive according to claim 1, wherein the component (D) is at least one selected from the group consisting of a hydrocarbon solvent, a ketone solvent, an ether solvent, and an ester solvent.

8. The addition-curable releasing silicone composition for a silicone pressure sensitive adhesive according to claim 2, wherein the component (D) is at least one selected from the group consisting of a hydrocarbon solvent, a ketone solvent, an ether solvent, and an ester solvent.

9. The addition-curable releasing silicone composition for a silicone pressure sensitive adhesive according to claim 3, wherein the component (D) is at least one selected from the group consisting of a hydrocarbon solvent, a ketone solvent, an ether solvent, and an ester solvent.

10. The addition-curable releasing silicone composition for a silicone pressure sensitive adhesive according to claim 4, wherein the component (D) is at least one selected from the group consisting of a hydrocarbon solvent, a ketone solvent, an ether solvent, and an ester solvent.

11. The addition-curable releasing silicone composition for a silicone pressure sensitive adhesive according to claim 5, wherein the component (D) is at least one selected from the group consisting of a hydrocarbon solvent, a ketone solvent, an ether solvent, and an ester solvent.

12. The addition-curable releasing silicone composition for a silicone pressure sensitive adhesive according to claim 6, wherein the component (D) is at least one selected from the group consisting of a hydrocarbon solvent, a ketone solvent, an ether solvent, and an ester solvent.

13. A release film, comprising:
a film substrate; and
a cured product layer of the addition-curable releasing silicone composition for a silicone pressure sensitive adhesive according to any one of claims 1 to 12 formed on an outer surface of at least one side of the film substrate.

14. A release paper, comprising:
a paper substrate; and
a cured product layer of the addition-curable releasing silicone composition for a silicone pressure sensitive adhesive according to any one of claims 1 to 12 formed on an outer surface of at least one side of the paper substrate.
